# EUROPÄISCHE PATENTSCHRIFT

(11) **EP 0 506 686 B1**
(45) Veröffentlichungstag und Bekanntmachung des Hinweises auf die Patenterteilung: **09.03.1994**
(21) Anmeldenummer: 91900017.4
(22) Anmeldetag: 10.12.1990
(51) Int. Cl.: F01N 3/28, F01N 3/02

(54) **ABGASLEITUNG MIT WENDELFÖRMIG ANGESTRÖMTEM KATALYSATOR-TRÄGERKÖRPER**
EXHAUST PIPE WITH HELICAL-FLOW CATALYST SUPPORT
CONDUITE DE GAZ D'ECHAPPEMENT AVEC UN SUPPORT DE CATALYSEUR RECEVANT UN ECOULEMENT HELICOIDAL

(30) Priorität: 22.12.1989 WO PCT/EP89/12378
(43) Veröffentlichungstag der Anmeldung: 07.10.1992
(73) Patentinhaber: Emitec Gesellschaft für Emissionstechnologie mbH, 53797 Lohmar (DE)
(72) Erfinder: SWARS, Helmut, D-5060 Bergisch Gladbach 1 (DE)
(74) Vertreter: Kahlhöfer, Hermann, Dipl.-Phys.
(86) Internationale Anmeldenummer: EP9002142
(87) Internationale Veröffentlichungsnummer: WO9110048

(56) Entgegenhaltungen:
- DE-A- 2 308 721
- GB-A- 2 040 179
- US-A- 2 682 312
- US-A- 4 519 820

## Beschreibung

Die vorliegende Erfindung betrifft eine in einem Winkel, vorzugsweise von etwa 90 °, abgeknickt geführte, aus mehreren Abschnitten bestehende Abgasleitung bei der ein erster Abschnitt über ein erstes Zwischenstück mit einem zweiten Abschnitt mit größerem Durchmesser verbunden ist und unmittelbar stromab vom ersten Zwischenstück ein Wabenkörper mit einer anströmseitigen Stirnfläche angeordnet ist.

Eine solche Anordnung ist beispielsweise aus der DE-OS 23 08 721 bekannt. Die Abgasleitungen von Verbrennungskraftmaschinen bei Kraftfahrzeugen müssen wegen der beengten Platzverhältnisse oft (gegebenenfalls mehrmals) abgeknickt geführt werden, um andere Bauteile zu umgehen, oder die gesamte Abgasanlage unter dem Kraftfahrzeug unterzubringen. An den Knickstellen treten erhöhte Druckverluste auf. Ebenso zu Druckverlusten führt die fast immer notwendige Anordnung von Schalldämpfern, in denen durch mehrfache Umlenkungen und/oder Reflektionen der Schallwellen eine Herabsetzung der Arbeitsgeräusche erreicht wird.

Zur Herabsetzung der Schadstoffemissionen von Verbrennungskraftmaschinen (bei Otto-Motoren insbesondere Kohlenmonoxid und Stickoxide, bei Diesel-Motoren dagegen in erster Linie Ruß) werden in Abgasleitungen zunehmend aus Metall oder Keramik hergestellte, wabenförmige Körper angebracht, die vermöge einer auf ihnen angebrachten katalytischen Beschichtung oder als Filter wirken. Die Wirksamkeit der katalytischen Beschichtung wird dadurch beeinträchtigt, daß die Abgasströmung in den notwendigerweise im Verhältnis zu ihrem Querschnitt langen Kanälen der Wabenkörper nach kurzer Zeit laminar wird. Gaspartikel, die sich in der Mitte des einen Kanal durchziehenden Stromfadens befinden, kommen so möglicherweise nicht mehr mit der katalytischen Beschichtung in Kontakt. Zur Behebung dieses Übelstandes ist bereits vorgeschlagen worden (DE-A-35 36 315) vor dem Katalysator-Trägerkörper Einrichtungen vorzusehen, die für eine bessere Verwirbelung sorgen. Dieser Effekt tritt auch bei der oben erwähnten DE-OS 23 08 721 teilweise auf.

Um den Druckverlust in Grenzen zu halten, ist es üblich, bei Vorhandensein einer Katalysatoranlage auf den sonst üblichen Vorschalldämpfer zu verzichten, allerdings bei entsprechend geringerer Schalldämmung.

Wie Versuche gezeigt haben, führt die Anordnung eines Katalysator-Trägerkörpers bzw. eines Dieselrußfilters in einem Abschnitt der Abgasleitung mit vergrößertem Querschnitt auch beim Vorhandensein eines kegelstumpfförmigen als Diffusor wirkenden Zwischenstückes zu einer über den Querschnitt ungleichmäßigen Anströmung des Wabenkörpers. Insbesondere die Randteile desselben werden schwächer beaufschlagt und dadurch weniger wirksam.

Aufgabe der vorliegenden Erfindung ist die Ausgestaltung einer abgeknickt zu führenden Abgasleitung derart, daß die Anströmung eines in ihr angeordneten Katalysator-Trägerkörpers bzw. eines Dieselrußfilters verbessert wird. Die damit zwangsläufig einhergehende Umlenkung des Gasstromes kann gleichzeitig zur Geräuschdämpfung benutzt werden, so daß der erwähnte Wegfall eines getrennten Vorschalldämpfers vollständig ausgeglichen werden kann; hierdurch kann der in der Abgasleitung insgesamt auftretende Druckverlust verringert werden. Weiter soll eine bessere Ausnutzung der katalytischen bzw. Filterleistung dadurch erzielt werden, daß die Anströmung über den Querschnitt vergleichmäßigt oder sogar auf die äußeren Bereiche verlagert wird.

Diese Aufgabe wird gelöst durch eine in einem Winkel abgeknickt geführte, aus mehreren Abschnitten bestehende Abgasleitung, bei der ein erster Abschnitt über ein erstes Zwischenstück mit einem zweiten Abschnitt mit größerem Durchmesser verbunden ist und unmittelbar stromab vom ersten Zwischenstück ein Wabenkörper mit einer anströmseitigen Stirnfläche angeordnet ist, wobei das erste Zwischenstück so geformt ist, daß dem Abgas ein sich der Stirnfläche wendelförmig und/oder spiralförmig nähernder Verlauf aufgezwungen wird, und wobei die Krümmung und Steigung der Wendel- bzw. Spirale so gewählt sind, daß schon umgelenktes Abgas nicht oder nur noch zu einem ganz geringen Anteil mit neu in das erste Zwischenstück einströmendem Abgas zusammentrifft.

Wenn das erste Zwischenstück innen etwa die Kontur eines sich der Stirnfläche nähernden und zu dieser hin aufgeschnittenen Rohrwendelabschnittes und/oder Rohrspiralenabschnittes hat, kann das in das Zwischenstück einströmende Abgas gleichmäßig auf die Stirnfläche des Wabenkörpers verteilt werden. Statt einer einfachen, mehr oder weniger rechtwinkligen Umlenkung des Abgasstromes, wird dieser in einer definierten wendelförmigen Bewegung schräg gegen die sich in axialer Richtung erstreckenden, die einzelnen Kanäle des Körpers voneinander trennenden Wände gerichtet. Hierdurch wird eine erhöhte Verwirbelung des Abgasstromes in den Kanälen erreicht, so daß der Beginn der Laminarisierung in den Kanälen hinausgeschoben wird. Im Abgasstrom laufende Schallwellen werden dabei außerdem durch mehrfache Reflektion an den Wänden gedämpft.

In Bezug auf die Verhältnisse der Durchmesser von erstem und zweiten Abschnitt hat sich ergeben, daß der erste Abschnitt etwa die Hälfte bis Dreiviertel des Durchmessers des zweiten Abschnittes haben sollte, wobei sich besonders günstige Verhältnisse ergeben, wenn der Durchmesser des ersten Abschnittes etwa halb so groß ist wie der Durchmesser des zweiten Abschnittes. In diesem Falle lassen sich, wie anhand des in der Zeichnung dargestellten Ausführungsbeispiels noch erläutert wird, besonders günstige Bedingungen erreichen.

Bevorzugt sollte das erste Zwischenstück etwa die Kontur einer dicht aneinander liegenden Rohrwendel haben und das Abgas innerhalb oder unterhalb etwa eines Umlaufs in der Wendel vollständig zu der Stirnfläche führen. Dabei ist festzuhalten, daß die Kontur des Zwischenstückes je nach den Größenverhältnissen der Durchmesser von erstem und zweiten Abschnitt entweder die Form einer Wendel, die Form einer Spirale oder die Form einer Schnecke oder eine Mischung aus diesen Formen annehmen kann, wobei sich jedoch in jedem Falle die die Abgasströmung führende Wand im Verlauf ihrer Krümmung immer mehr der Stirnfläche des Wabenkörpers nähert.

Als günstig haben sich experimentell solche Formen des ersten Zwischenstücks erwiesen, die den Abgasstrom unter einem Winkel von 30° bis 60° auf die Stirnfläche des Wabenkörpers auftreffen lassen.

Als günstig hat es sich auch erwiesen, wenn der erste Abschnitt annähernd tangential in das erste Zwischenstück einmündet, da auf diese Weise das Abgas exzentrisch und unter geringstem Druckverlust in das Zwischenstück einströmt.

Falls die Abgasleitung hinter dem zweiten Abschnitt eine weitere Knickstelle aufweist, ist es natürlich günstig, diese durch ein zweites Zwischenstück ähnlich der ersten Knickstelle zu gestalten. Bei einer solchen Anordnung kann ein Wabenkörper quer zur Fahrtrichtung eines Kraftfahrzeuges eingebaut werden.

Für den Fall, daß der Wabenkörper ein Katalysator-Trägerkörper zur Abgasentgiftung ist, kann dieser bevorzugt aus einer Mehrzahl strukturierter Blechlagen aufgebaut sein. Solche metallischen Wabenkörper sind beispielsweise in der DE-U-89 08 671 oder der EP-A-0 245 736 oder der EP-A-0 245 737 beschrieben. Im Zusammenhang mit der vorliegenden Erfindung können solche Körper zur Verbesserung der Schalldämpfung dahingehend modifiziert werden, daß ein Teil der Bleche an der anströmseitigen Stirnfläche des Katalysator-Trägerkörpers über die anderen Bleche hinausragt. Neben einer Erhöhung der schalldämmenden Wirkung wird dadurch auch die Turbolenz der Strömung in den Kanälen begünstigt.

Sofern die Bleche eines metallischen Wabenkörpers in einem gemeinsamen Sinne, z. B. evolventenförmig oder annähernd kreisförmig, vom Inneren des Wabenkörpers nach außen verlaufen, können die Eigenschaften der Anordnung dadurch beeinflußt werden, daß der dem Abgas durch das erste Zwischenstück gegebene Drehsinn gleichsinnig oder gegensinnig zur vorherrschenden Krümmung der Bleche gewählt wird. Ein übereinstimmender Drehsinn kann den Druckverlust der Anordnung verringern, während ein entgegengesetzter Drehsinn ein stärkere Schalldämmung bewirken kann.

Eine weitere Verbesserung der schalldämmenden Wirkung kann dadurch erzielt werden, daß wenigstens ein Teil der Bleche mit Öffnungen versehen ist, durch die benachbarte der zwischen ihnen gebildeten Kanäle in Verbindung miteinander stehen. Da die in den verschiedenen Kanälen sich fortpflanzenden Schallwellen phasenverschoben zueinander sind, ist damit zu rechnen, daß an den durch die Öffnungen dargestellten Verbindungsstellen Schallwellen einander durch Überlagerung teilweise auslöschen.

Für den Fall, daß der Wabenkörper ein Dieselrußfilter ist, können ebenfalls einige der die Waben bildenden Stege an der anströmseitigen Stirnfläche über die anderen Stege hinausragen, wodurch auch hier günstigere schalldämmende Eigenschaften erreicht werden.

Eine zusätzliche Erhöhung der schalldämpfenden Wirkung kann bei der erfindungsgemäßen Anordnung dadurch erreicht werden, daß das erste und/oder zweite Zwischenstück auf der Innenseite eine Oberflächenstruktur aufweisen, die schalldispergierend wirkt.

Dies kann beispielsweise durch Noppen oder ähnliche Einbauten erreicht werden.

Ein Ausführungsbeispiel der Erfindung ist in der Zeichnung dargestellt, und zwar zeigen
Figur 1 eine Ansicht von oben (teils geschnitten) auf eine Abgasleitung entsprechend der Richtung I der Figur 2,
Figur 2 eine Draufsicht entsprechend der Richtung II der Figur 1 und die
Figuren 3 und 4 zwei Alternativen eines Querschnitts entsprechend den Linien III-III bzw. IV-IV der Figur 1.

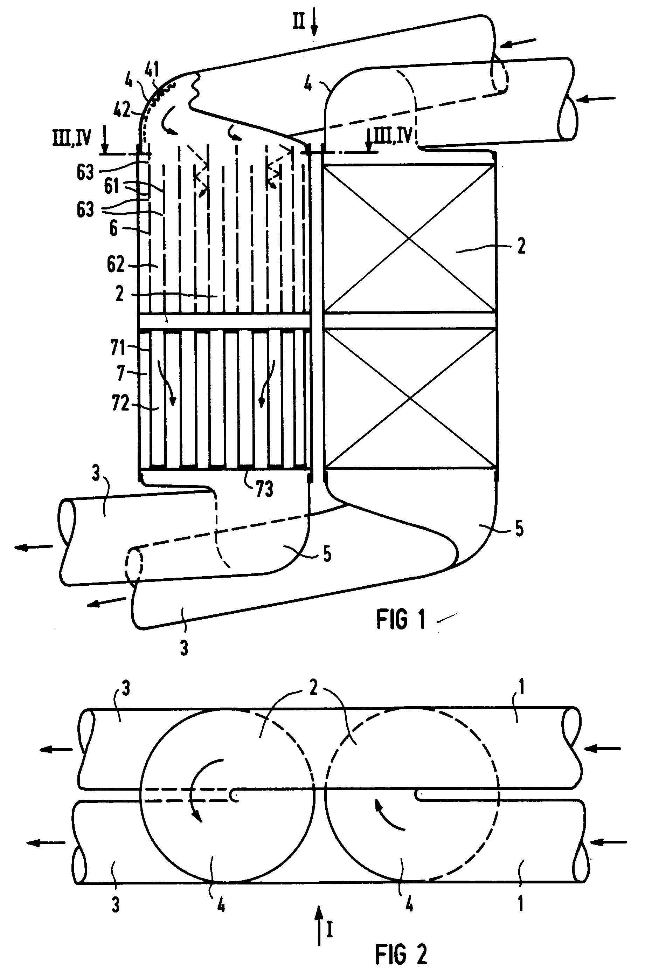

In der Zeichnung ist eine besonders platzsparende Anordnung einer doppelten Abgasleitung dargestellt, wobei jede Abgasleitung aus einem ersten Abschnitt 1, einem zweiten Abschnitt 2 mit vergrößertem Durchmesser und einem dritten Abschnitt 3 besteht, die auf geeignete, hier nicht dargestellte Weise, z. B. durch Verschraubung miteinander verbunden sind, und zwar unter Zwischenschaltung von ersten Zwischenstücken 4 bzw. zweiten Zwischenstücken 5. Die ersten Abschnitte 1 treten in die ersten Zwischenstücke 4 exzentrisch ein, und ebenso sind die dritten Abschnitte 3 an den zweiten Zwischenstücken 5 exzentrisch angeordnet. Die Zwischenstücke 4, 5 selbst sind innen etwa entsprechend der Kontur einer Rohrwendel oder Rohrspirale oder Rohrschnecke oder einer Kombination dieser Formen gestaltet, wobei der Fachmann die Form im einzelnen an die vorgefundenen Gegebenheiten, z. B. an den Unterschied der Durchmesser zwischen ersten bzw. dritten 1, 3 bzw. zweiten Abschnitt 2 anpassen wird; ebenso wird die Form der Zwischenstücke 4, 5 beeinflußt werden, wenn die Umlenkung zwischen den einzelnen Abschnitten, wie links oben und rechts unten in der Figur 1 dargestellt, nicht exakt rechtwinklig erfolgt. Besonders vorteilhaft ist es, wenn der Durchmesser des ersten bzw. dritten Abschnittes 1, 3 etwa die Hälfte bis zu drei Viertel des Durchmessers des zweiten Abschnittes 2 beträgt, wobei die Exzentrizität der ersteren zu dem letzteren so bemessen ist, daß sie insgesamt nur auf einer Seite der Längsachse zu liegen kommt; ggf. ist der dann erforderliche, hier nicht dargestellte Überstand der Zwischenstücke 4, 5 strömungsgünstig wieder auf den Durchmesser des zweiten Abschnittes 2 zurückzuführen. Wichtig ist, daß dem Abgasstrom durch das erste Zwischenstück 4 eine wendelförmige und/oder spiralförmige Bewegung in Richtung der Stirnfläche des nachfolgenden Wabenkörpers aufgezwungen wird. Innerhalb der zweiten Abschnitte 2 sind Katalysator-Trägerkörper 6 und/oder Dieselrußfilter 7 angeordnet. Dabei wird in den meisten Fällen die Anordnung nur eines Körpers der einen Art genügen. Ebenso ist auch eine umgekehrte Anordnung, d. h. mit einem Dieselrußfilter 7 in Strömungsrichtung vor einem Katalysator-Trägerkörper 6 denkbar. Der Wabenkörper kann aus einer Keramik bestehen; im vorliegenden Falle wurde jedoch angenommen, daß es sich um einen Katalysator-Trägerkörper handelt, der aus einzelnen, strukturierten, vorzugsweise abwechselnd glatten und gewellten Blechlagen, besteht, die z. B. etwa kreisförmig gebogen oder evolventenförmig von innen nach außen verlaufen. Diese sind mit einer Beschichtung versehen, die im Abgas mitgeführtes Kohlenmonoxid zu Kohlendioxid und Stickoxide zu Stickstoff und Sauerstoff umwandeln. Um das Einsetzen laminarer Strömung in den verhältnismäßig zu ihrem Querschnitt langen, durch die Bleche 61 gebildeten Kanälen 62 soweit wie möglich hinauszuzögern, stehen einzelne der Bleche 61 (hier jedes zweite) an ihrer Vorderseite über die übrigen Bleche hinaus. Dies führt in Verbindung mit der durch das erste Zwischenstück 4 erzeugten wendelförmigen Strömung (durch die Pfeile angedeutet) zu einer besseren Verwirbelung des Abgasstromes. Die schräge Anströmung der Bleche bewirkt außerdem, daß die von der hier nicht gezeigten Verbrennungskraftmaschine herrührenden Schallwellen (gestrichelte Linien) mehrfach an den Blechen reflektiert werden, so daß bereits eine erhebliche Herabsetzung des Schallpegels erzielt wird; hierdurch kann der im späteren Verlauf der Abgasleitung angeordnete, hier ebenfalls nicht gezeigte Schalldämpfer vereinfacht werden, so daß auch der durch ihn hervorgerufene Druckverlust abnimmt; auf diese Weise wird der durch die Umlenkung des Gasstromes und insbesondere durch die Schräganströmung der Bleche 61 hervorgerufene zusätzliche Druckverlust wieder kompensiert. Eine weitere Erhöhung dieser schalldämmenden Wirkung kann dadurch erzielt werden, daß das erste Zwischenstück 4 auf seiner Innenseite mit einer Oberflächenstruktur versehen wird, die schalldispergierend wirkt. Im Beispiel sind Noppen 41 und ein perforiertes, im Abstand zur Wand angeordnetes Doppelblech 42 angedeutet. Gleiche Mittel können selbstverständlich auch im zweiten Zwischenstück 5 vorgesehen werden. Mindestens ein Teil der Bleche 61 ist mit Öffnungen 63 versehen, durch die sich in einem bestimmten der Kanäle 62 laufende Schallwellen mit denjenigen, die in benachbarten Kanälen laufen überlagern können; und zwar vorzugsweise so, daß sie einander auslöschen. Durch Versuche kann die geeignetste Anordnung der Öffnungen 63 nach Größe, Anzahl, Abstand voneinander usw. ermittelt werden. Das im zweiten Abschnitt 2 angeordnete Dieselrußfilter 7 besteht vorzugsweise aus einem keramischen Wabenkörper, bei dem Stege 71 zwischen sich Kanäle 72 bilden. Die einzelnen Kanäle 72 sind abwechselnd an ihrem in Strömungsrichtung gesehenen vorderen und hinteren Ende mit Stopfen 73 verschlossen, so daß das Abgas gezwungen wird, seinen Weg durch die porösen Stege 71 zu nehmen; hierbei werden mitgeführte Rußpartikel festgehalten.

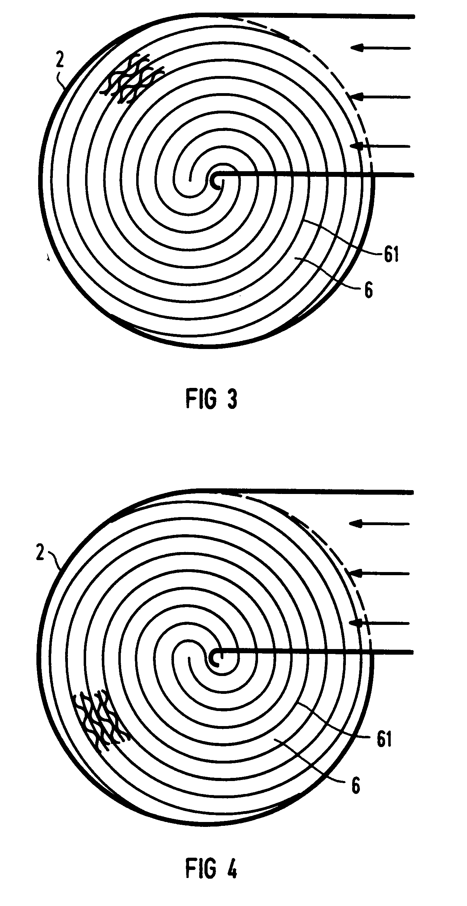

Wie in den Figuren 3 und 4 dargestellt, kann der Drehsinn der gebogen oder etwa evolventenförmig verlaufenden, abwechselnd glatten und gewellten Bleche 61 verschieden gewählt werden bei angenommen gleicher Anströmungsrichtung durch das Abgas (durch die Pfeile angedeutet). In der Ausgestaltung entsprechend der Figur 3 werden die Bleche 61 überwiegend in Querrichtung angeströmt. Hierdurch wird eine erhöhte schallreduzierende Wirkung erzielt, da die Schallwellen vermehrt zwischen den Blechen 61 reflektiert werden. Demgegenüber werden diese bei einer Anordnung entsprechend der Figur 4 überwiegend in der Richtung ihrer Krümmung angeströmt, so daß ihr Strömungswiderstand minimiert wird. Darüber hinaus ist erkennbar, daß bei einer Anordnung gemäß der Figur 3 der Abgasstrom bevorzugt in das Zentrum gelenkt wird, bei einer Anordnung gemäß Figur 4 dagegen vor allem in die Randzonen. Diese Auswirkung des verschiedenen Drehsinnes kann im Zusammenhang mit der angestrebten Vergleichmäßigung der Anströmung über den Querschnitt von Bedeutung sein.

## Patentansprüche

1. Abgasleitung, im einem Winkel, vorzugsweise etwa 90 °, abgeknickt geführt, aus mehreren Abschnitten (1, 2, 3) bestehend, bei der ein erster Abschnitt (1) über ein erstes Zwischenstück (4) mit einem zweiten Abschnitt (2) mit größerem Durchmesser verbunden ist und unmittelbar stromab vom ersten Zwischenstück (4) ein Wabenkörper (6; 7) mit einer anströmseitigen Stirnfläche angeordnet ist, dadurch gekennzeichnet, daß das erste Zwischenstück (4) so geformt ist, daß dem Abgas ein sich der Stirnfläche wendelförmig und/oder spiralförmig nähernder Verlauf aufgezwungen wird, und daß die Krümmung und Steigung der Wendel bzw. Spirale so gewählt sind, daß schon umgelenktes Abgas nicht oder nur noch zu einem ganz geringen Anteil mit neu in das erste Zwischenstück (4) einströmendem Abgas zusammentrifft.

2. Abgasleitung, in einem Winkel, vorzugsweise etwa 90 °, abgeknickt geführt, aus mehreren Abschnitten (1, 2, 3) bestehend, bei der ein erster Abschnitt (1) über ein erstes Zwischenstück (4) mit einem zweiten Abschnitt (2) mit größerem Querschnitt verbunden ist und unmittelbar stromab vom ersten Zwischenstück (4) ein Wabenkörper (6; 7) mit einer anströmseitigen Stirnfläche angeordnet ist, dadurch gekennzeichnet, daß das erste Zwischenstück (4) innen etwa die Kontur eines sich der Stirnfläche nähernden und zu dieser hin aufgeschnittenen Rohrwendelabschnittes und/oder Rohrspiralenabschnittes hat.

3. Abgasleitung nach Anspruch 1 oder 2, **dadurch gekennzeichnet**, daß der erste Abschnitt (1) einen Durchmesser hat, der etwa der Hälfte bis Dreiviertel des Durchmessers des zweiten Abschnittes (2) entspricht, vorzugsweise etwa der Hälfte.

4. Abgasleitung nach Anspruch 3, **dadurch gekennzeichnet**, daß das erste Zwischenstück (4) etwa die Kontur einer dicht aneinanderliegenden Rohrwendel hat und das Abgas innerhalb oder unterhalb etwa eines Umlaufs in der Wendel vollständig zu der Stirnfläche führt.

5. Abgasleitung nach Anspruch 1, **dadurch gekennzeichnet**, daß dem Abgasstrom durch die Form des ersten Zwischenstückes (4) ein Verlauf aufgezwungen wird, bei dem er unter einem Winkel von 30 bis 60° auf die Stirnfläche des Wabenkörpers (6; 7) trifft.

6. Abgasleitung nach einem der vorhergehenden Ansprüche, **dadurch gekennzeichnet**, daß der erste Abschnitt (1) annähernd tangential in das erste Zwischenstück (4) einmündet.

7. Abgasleitung nach einem der vorhergehenden Ansprüche, **dadurch gekennzeichnet**, daß der Übergang zwischen dem zweiten Abschnitt (2) und einem dritten Abschnitt (3) durch ein dem ersten Zwischenstück (4) ähnliches Zwischenstück (5) gebildet wird.

8. Abgasleitung nach einem der vorhergehenden Ansprüche, **dadurch gekennzeichnet**, daß der Wabenkörper ein Katalysator-Trägerkörper (6) zur Abgasentgiftung ist.

9. Abgasleitung nach Anspruch 8, **dadurch gekennzeichnet**, daß der Katalysator-Trägerkörper (6) eine Mehrzahl strukturierter Blechlagen (61) enthält.

10. Abgasleitung nach Anspruch 9, **dadurch gekennzeichnet**, daß ein Teil der Bleche (61) an der anströmseitigen Stirnfläche des Katalysator-Trägerkörpers (6) über die anderen Bleche hinausragt.

11. Abgasleitung nach Anspruch 9 oder 10, **dadurch** **gekennzeichnet**, daß die Bleche (61) alle in einem gemeinsamen Sinne gebogen, z. B. evolventenförmig oder kreisförmig gebogen, vom Inneren des Katalysator-Trägerkörpers (6) nach außen verlaufen und das Abgas durch das Zwischenstück (4) in gleicher Krümmungsrichtung umgelenkt wird.

12. Abgasleitung nach Anspruch 9 oder 10, **dadurch gekennzeichnet**, daß die Bleche (61) alle in einem gemeinsamen Sinne gebogen, z. B. evolventenförmig oder kreisförmig gebogen, vom Inneren des Katalysator-Trägerkörpers (6) nach außen verlaufen und das Abgas durch das Zwischenstück (4) in gegensinniger Krümmungsrichtung umgelenkt wird.

13. Abgasleitung nach Anspruch 9, 10, 11 oder 12, **dadurch gekennzeichnet**, daß wenigstens ein Teil der Bleche (61) mit Öffnungen (63) versehen ist, durch die benachbarte der zwischen ihnen gebildeten Kanäle (62) in Verbindung miteinander stehen.

14. Abgasleitung nach einem der Ansprüche 1 bis 7, **dadurch gekennzeichnet**, daß der Wabenkörper ein Dieselrußfilter (7) ist.

15. Abgasleitung nach Anspruch 9, **dadurch gekennzeichnet**, daß der Dieselrußfilter (7) aus einer wabenförmigen Keramik besteht, wobei ein Teil der die Waben bildenden Stege (71) an der anströmseitigen Stirnfläche über die anderen Stege hinausragt.

16. Abgasleitung nach einem der vorhergehenden Ansprüche, **dadurch gekennzeichnet**, daß das erste (4) und/oder zweite (5) Zwischenstück auf ihrer Innenseite eine Oberflächenstruktur (41, 42) aufweisen, die schalldispergierend wirkt.

## Claims

1. Exhaust pipe bent at an angle, preferably of approximately 90°, formed from a plurality of sections (1, 2, 3), a first section of which (1) is connected by means of a first connecting piece (4) to a second section (2) with a larger diameter, and directly downstream from the first connecting piece (4) a honeycomb (6; 7) with an end face on the upstream side is arranged, characterised in that the first connecting piece (4) is formed so that the exhaust gas has to follow an approximately helical and/or spiral course through the end face, and that the curvature and incline of the helix and/or spiral is selected so that none, or only a very small amount of the exhaust gas already diverted meets the new exhaust gas flowing into the first connecting piece (4).

2. Exhaust pipe bent at an angle, preferably of approximately 90°, formed from a plurality of sections (1, 2, 3), a first section of which (1) is connected by means of a first connecting piece (4) to a second section (2) with a larger cross-section, and directly downstream from the first connecting piece (4) a honeycomb (6; 7) with an end face on the upstream side is arranged, characterised in that the first connecting piece (4) internally has approximately the contour of a tubular helical section and/or a tubular spiral section approaching and cut as far as the end face.

3. Exhaust pipe according to claim 1 or 2, characterised in that the first section (1) has a diameter which is approximately half to three-quarters the diameter of the diameter of the second section (2), preferably approximately half.

4. Exhaust pipe according to claim 3, characterised in that the first connecting piece (4) has approximately the contour of a tightly wound tubular helix and leads the exhaust gas to the end wall within or in less than approximately one circulation in the helix.

5. Exhaust pipe according to claim 1, characterised in that because of the shape of the first connecting piece (4), the flow of exhaust gas is forced to follow a course in which it arrives at the end face of the honeycomb (6; 7) at an angle of 30 to 60°.

6. Exhaust pipe according to one of the previous claims, characterised in that the first section (1) opens out approximately tangentially into the first connecting piece (4).

7. Exhaust pipe according to one of the previous claims, characterised in that the transition between the second section (2) and a third section (3) is by means of a connecting piece (5) similar to the first connecting piece (4).

8. Exhaust pipe according to one of the previous claims, characterised in that the honeycomb is a catalytic convertor support (6) for detoxification of exhaust gas.

9. Exhaust pipe according to claim 8, characterised in that the catalytic convertor support (6) contains a plurality of structured layers of plate (61).

10. Exhaust pipe according to claim 9, characterised in that a section of the plates (61) protrudes above the remaining plates on the upstream end wall of the catalytic convertor support (6).

11. Exhaust pipe according to claim 9 or 10, characterised in that the plates (61) are all curved in a common direction, for example, involutedly or circularly curved, and extend from the interior of the catalytic convertor support (6) to the exterior, and that exhaust gas is diverted through the connecting piece (4) in the same curved direction.

12. Exhaust pipe according to claim 9 or 10, characterised in that the plates (61) are in curved in a common direction, for example, involutedly or circularly curved, and extend from the interior of the catalytic convertor support (6) to the outside, and that exhaust gas is diverted through the connecting piece (4) in the opposite curved direction.

13. Exhaust pipe according to claim 9, 10, 11 or 12, characterised in that at least a section of the plates (61) is provided with apertures (63) by means of which adjacent channels (62) formed between them are connected to one another.

14. Exhaust pipe according to one of claims 1 to 7, characterised in that the honeycomb is a diesel carbon filter (7).

15. Exhaust pipe according to claim 9, characterised in that the diesel carbon filter (7) is of a honeycombed ceramic, whereby a section of the segments (71) forming the honeycomb protrudes above the remaining segments on the upstream side.

16. Exhaust pipe according to one of the previous claims, characterised in that the first connecting piece (4) and/or second connecting piece (5) is provided internally with a surface structure (41, 42) which has a vibration dispersing effect.

## Revendications

1. Conduite d'échappement de gaz coudée suivant un angle, de préférence un angle d'environ 90°, et formée de plusieurs sections (1, 2, 3), dans laquelle une première section (1) est reliée à une deuxième section (2) de plus gros diamètre par l'intermédiaire d'une première pièce intermédiaire (4) et un corps alvéolaire (6 ; 7) avec une face frontale du côté de l'entrée de flux est disposé directement en aval de la première pièce intermédiaire (4), **caractérisée en ce que** la première pièce intermédiaire (4) est conformée de manière à imposer au gaz d'échappement un trajet en forme spiralée ou hélicoïdale se rapprochant de la face frontale, et en ce que la courbure et le pas de la spirale ou de l'hélice sont choisis de telle manière que du gaz d'échappement déjà dévié ne rencontre pas, ou seulement en une très faible proportion, du gaz d'échappement nouveau affluant dans la première pièce intermédiaire (4).

2. Conduite d'échappement de gaz coudée suivant un angle, de préférence un angle d'environ 90°, et formée de plusieurs sections (1, 2, 3), dans laquelle une première section (1) est reliée à une deuxième section (2) de plus gros diamètre par l'intermédiaire d'une première pièce intermédiaire (4) et un corps alvéolaire (6 ; 7) avec une face frontale du côté de l'entrée de flux est disposé directement en aval de la première pièce intermédiaire (4), **caractérisée en ce que** la première pièce intermédiaire (4) présente intérieurement approximativement le contour d'une section d'hélice tubulaire et/ou d'une section de spirale tubulaire se rapprochant de la face frontale et se découpant de cette dernière.

3. Conduite d'échappement de gaz selon la revendication 1 ou 2, **caractérisée en ce que** la première section (1) a un diamètre qui correspond approximativement à une valeur allant de la moitié au tiers du diamètre de la deuxième section (2), de préférence approximativement la moitié.

4. Conduite d'échappement de gaz selon la revendication 3, **caractérisée en ce que** la première pièce intermédiaire (4) présente approximativement le contour d'une hélice tubulaire étroitement jointive et dirige le gaz d'échappement à l'intérieur ou au-dessous approximativement d'un trajet dans l'hélice entièrement vers la face frontale.

5. Conduite d'échappement de gaz selon la revendication 1, **caractérisée en ce que** l'on impose au courant de gaz d'échappement, par la forme de la première pièce intermédiaire (4), un trajet qui rencontre la face frontale du corps alvéolaire (6 ; 7) sous un angle de 30 à 60°.

6. Conduite d'échappement de gaz selon l'une des revendications précédentes, **caractérisée en ce que** la première section (1) débouche à peu près tangentiellement dans la première pièce intermédiaire (4).

7. Conduite d'échappement de gaz selon l'une des revendications précédentes, **caractérisée en ce que** l'on forme une jonction entre la deuxième section (2) et une troisième section (3) par l'intermédiaire d'une pièce intermédiaire (5) semblable à la première pièce intermédiaire (5).

8. Conduite d'échappement de gaz selon l'une des revendications précédentes, **caractérisée en ce que** le corps alvéolaire est un corps support de catalyseur (6) pour l'épuration des gaz d'échappement.

9. Conduite d'échappement de gaz selon la revendication 8, **caractérisée en ce que** le corps support de catalyseur (6) contient une pluralité de couches de tôles (61) structurées.

10. Conduite d'échappement de gaz selon la revendication 9, **caractérisée en ce qu'**une partie des tôles (61) dépassent les autres tôles à l'endroit de la face frontale, du côté de l'entrée de flux, du corps support de catalyseur (6).

11. Conduite d'échappement de gaz selon la revendication 9 ou 10, **caractérisée en ce que** les tôles (61) s'étendent depuis l'intérieur du corps support de catalyseur (6) vers l'extérieur toutes courbées dans leur globalité, par exemple courbées en forme de développante ou en forme de cercle, et on dévie le gaz d'échappement par l'intermédiaire de la pièce intermédiaire (4) dans le même sens de courbure.

12. Conduite d'échappement de gaz selon la revendication 9 ou 10, **caractérisée en ce que** les tôles (61) s'étendent depuis l'intérieur du corps support de catalyseur (6) vers l'extérieur toutes courbées dans leur globalité, par exemple courbées en forme de développante ou en forme de cercle, et on dévie le gaz d'échappement par l'intermédiaire de la pièce intermédiaire (4) dans le sens de courbure opposé.

13. Conduite d'échappement de gaz selon la revendication 9, 10, 11 ou 12, **caractérisée en ce qu'**au moins une partie des tôles (61) sont pourvues d'ouvertures (63) au travers desquelles viennent en communication des canaux adjacents formés entre celles-ci.

14. Conduite d'échappement de gaz selon l'une des revendications 1 à 7, **caractérisée en ce que** le corps alvéolaire est un filtre à suie de moteur Diesel (7).

15. Conduite d'échappement de gaz selon la revendication 9, **caractérisée en ce que** le filtre à suie de moteur Diesel (7) est constitué d'une céramique alvéolaire, une partie des entretoises (71) formant les alvéoles dépassant les autres entretoises à l'endroit de la face frontale, du côté de l'entrée de flux.

16. Conduite d'échappement de gaz selon l'une des revendications précédentes, **caractérisée en ce que** la première (4) et/ou la deuxième (5) pièce intermédiaire comportent sur leur face interne une structure de surface (41, 42) servant à la dispersion acoustique.
